# EUROPÄISCHE PATENTANMELDUNG

(11) **EP 0 945 087 A2**
(43) Veröffentlichungstag der Anmeldung: **29.09.1999**
(21) Anmeldenummer: 99890008.8
(22) Anmeldetag: 20.01.1999
(51) Int. Cl.: A47B 77/02, F16B 12/04

(54) **Arbeitsplatte, insbesondere Küchenarbeitsplatte**

(30) Priorität: 18.03.1998 AT 16698 U
(71) Anmelder: Lederhilger, Johann, 4621 Sipbachzell (AT)
(72) Erfinder: Lederhilger, Johann, 4621 Sipbachzell (AT)
(74) Vertreter: Hübscher, Helmut, Dipl.-Ing.

(57) **Zusammenfassung**

Bei einer Arbeitsplatte, insbesondere Küchenarbeitsplatte, aus zwei oder mehreren aneinandergesetzt verbundenen Plattenelementen (1 bis 4), die jeweils aus einer Kernplatte (8) und einer wenigstens über die Oberseite dieser Kernplatte (8) reichenden Deckplatte (7), insbesondere aus kunstharzgebundenem Mineralstein bestehen, sind die Plattenelemente (1 bis 4) über Nut-Federverbindungen (13 bis 16) mit über den Stoßbereich (9, 10, 11) durchgehenden, gegenüberliegenden Nuten (13, 14) zum Einlegen der Federn (15, 16) zusammengehalten, wobei jeweils eine Nut (13) oben von dem über sie überstehenden Rand (17) der Deckplatte (7) begrenzt ist, wenigstens die in diese Nuten (13) einzulegende, über die Nutlänge durchgehende Feder (15) aus dem Material der Deckplatte (7) oder einem gleiche Eigenschaften aufweisenden Material besteht, der Stoßspalt (9, 10, 11) der Deckplatten (7) mit dem Deckplatten-Bindemittel ausgefüllt ist. Die Feder (15) kann mit den überstehenden, die Nut begrenzenden Deckplattenrändern (17) verklebt sein.

## Beschreibung

Die Erfindung betrifft eine Arbeitsplatte, insbesondere Küchenarbeitsplatte, nach dem Oberbegriff des Patentanspruches 1.

Der einschlägige Stand der Technik ergibt sich aus folgenden Literaturstellen: FR 2 716 784 A, GB 859 484 A, US 5 018 628 A und US 5 253 932 A.

Bei derartigen Arbeitsplatten richtet sich die Dicke und das Material der Kernplatte vorwiegend nach der notwendigen Festigkeit und dem jeweiligen Verwendungszweck der Arbeitsplatte. Häufig werden für die Kernplatte Preßspanplatten der jeweils erforderlichen Dicke verwendet. Die Deckplatte bestimmt nicht nur das Aussehen und die Oberflächenstruktur der Arbeitsplatte, sondern soll dieser Platte auch die notwendige Verschleißfestigkeit geben und etwa bei Küchenarbeitsplatten den Zutritt von Feuchtigkeit zu der dagegen meist empfindlichen Kernplatte sicher verhindern. Dabei ist es vorteilhaft, wenn die Deckplatte möglichst nahtlos in eine aus dem gleichen Material gebildete stirnseitige Abdeckung der Arbeitsplatte übergeht. Besondern bei Einbaumöbeln und Einbauküchen ergibt sich das Problem, daß die Arbeitsplatte häufig über Ecken geführt werden muß, wenn ein Verbau z. B. L- oder U-Form aufweist. Überdies soll die Arbeitsplatte oft auch vorhandene Wandnischen, z. B. Fensternischen, ausfüllen und bzw. oder an der sichtbaren Frontseite Vorsprünge oder Einbuchtungen erhalten. Am Ende der Arbeitsplatte sind oft zur Vermeidung von Ecken Rundungen oder Abschrägungen erwünscht. Bisher ist es üblich, möglichst große Plattenelemente zur Bildung der Gesamtarbeitsplatte zu verwenden, wobei bei dem genannten Beispiel der L- oder U-Form jeweils ein Plattenelement über einen Schenkel bzw. den U-Steg durchläuft. Zur Vermeidung zu vieler Verbindungen bei den herkömmlichen Verbindungsarten, wo die Plattenelemente im stumpfen Stoß verlegt und im Stoßbereich verleimt werden, werden bei notwendigen seitlichen Vorsprüngen der Arbeitsplatte entsprechend breite Plattenelemente verwendet, deren Ränder entsprechend dem gewünschten Verlauf zugeschnitten werden. Abgesehen von dem beträchtlichen Verschnitt ergibt sich bei frontseitigen Vorsprüngen oder Einbuchtungen der Arbeitsplatte das Problem, daß hier - ebenso wie erst bei der Verlegung angebrachten Endrundungen - vorhandene Stirnseitenummantelungen enffernt werden, so daß es meist vorgezogen wird, solche Ummantelungen oder entsprechende Abdeckleisten erst nach dem Endzuschnitt der Plattenelemente anzubringen, wobei sich Probleme mit der Abdichtung zwischen Deckplatte und Stinseitenummantelung ergeben und Schmutzfugen kaum vermeidbar sind.

Aufgabe der Erfindung ist die Schaffung einer Arbeitsplatte, die auch bei der Zusammensetzung aus mehreren Plattenelementen undichte Stellen im Stoßbereich der Deckplatten der einzelnen Elemente vermeidet. Eine Teilaufgabe besteht darin, die Arbeitsplatte so auszubilden, daß auch Vorsprünge an beiden Plattenseiten sowie Endabrundungen ohne wesentlichen Plattenverschnitt herstellbar sind. Schließlich soll auch das Problem eines sauberen und dichten Einbaues von Einsatzteilen in die Arbeitsplatte gelöst werden.

Die gestellte Aufgabe wird prinzipiell durch die Merkmale des Patentanspruches 1 gelöst.

Durch diese Ausführung wird ein einwandfrei dichter Abschluß des Stoßbereiches von aneinandergereihten Deckplatten gewährleistet, so daß es sinnvoll wird, eine größere Arbeitsplatte nicht aus möglichst großen, sondern aus kleineren Einzelelementen zusammenzusetzen, wobei gewünschte Sonderformen der Arbeitsplatte, z. B. Endrundungen, Einbuchtungen oder Vorsprünge, nicht durch einen entsprechenden Zuschnitt eines größeren Plattenelementes, sondern durch kleinere, ansetzbare und die jeweilige Sonderform bestimmende Plattenelemente ausgeführt werden können.

Vorteilhaft ist dabei die ergänzende Ausbildung nach Anspruch 2. Bei einer Weiterbildung des Erfindungsgegenstandes gemäß Anspruch 3 wird zwar über die gesamte Länge des Stoßbereiches eine hinreichend feste Nut-Federverbindung erzielt, doch stören die Nuten das Gesamtaussehen der freien Stirnseiten nicht mehr. Die zwischen den stoßenden Stirnseitenenden gebildete Fuge kann wieder, wie oben beschrieben, ausgefüllt werden.

Durch eine Ausführung nach Anspruch 4 wird der Verbindungsbereich über einen größeren Teil der Plattenlänge verteilt und es wird eine innige Verbindung erhalten, wobei die Gefahr eines späteren Aufspringens der Fuge weitgehend beseitigt ist. Die erwähnte Sonderform ergibt auch bei Plattenelementen mit Stirnseitenummantelung eine weitgehend dichte und kaum sichtbare Fuge in den stoßenden Stirnseitenteilen. Die Fugen sind in ihrem Verlauf gegenüber den sichtbaren Stirnseiten versetzt und fallen daher weniger auf. Der Verbindungsbereich eines angesetzten Plattenelementes mit dem durchlaufenden Plattenelement wird in dieses letztgenannte Element hineinverlegt, hat also einen anderen Verlauf als der sichtbare Außenrand dieses Plattenelementes. Da nicht nur stirnseitig, sondern wegen der Abrundung auch teilweise an den Seiten des angesetzten Plattenelementes eine Verbindung erfolgt, ergibt sich eine erhöhte Festigkeit für diese Verbindung und es ist überdies möglich, das angesetzte Plattenelement im Bedarfsfall auf der Tragkonstruktion der Arbeitsplatte, z. B. dem Rahmen eines Küchenverbaues, abzustützen.

Dünnwandige Abwaschbecken und ähnliche Einbauteile können in herkömmlicher Weise in entsprechende Ausschnitte des jeweiligen Plattenelementes eingesetzt werden. Um Sonderwünsche befriedigen zu können und beispielsweise den Einbau eingefärbter Tropftassen an Abwaschbecken zu ermöglichen, wird erfindungsgemäß eine Ausbildung nach Anspruch 5 gewählt. Form und Größe des Tragrahmens können wieder genau an den jeweils anzubringenden Einsatzteil angepaßt werden. Besonders bei Tropftassen kann nach Anspruch 6 der Tragrahmen aus dem gleichen Material wie die Deckplatten bestehen, aber eine größere Dicke aufweisen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
Fig. 1 eine Arbeitsplatte für eine L-förmige Einbauküche in Draufsicht
Fig. 2 einen Schnitt nach der Linie II-II der Fig. 1 und
Fig. 3 einen Schnitt nach der Linie III-III der Fig. 1.

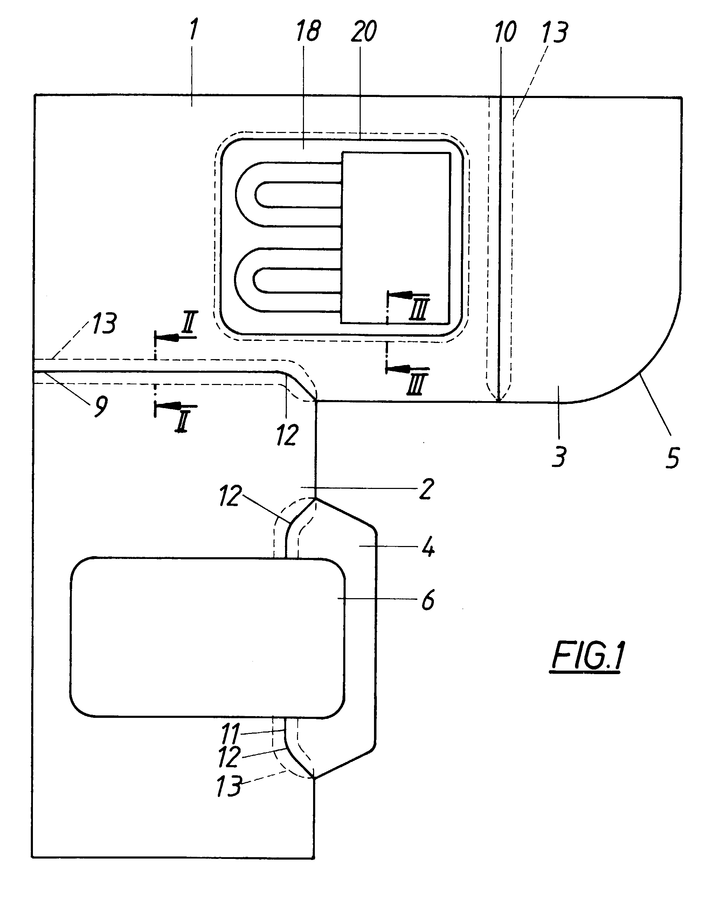

Die Arbeitsplatte nach Fig. 1 ist aus vier Plattenelementen 1, 2, 3, 4 zusammengesetzt. Dabei bildet das Plattenelement 1 den einen und die Plattenelemente 2 bis 4 den anderen Längsschenkel der Arbeitsplatte. Die Plattenelemente 1, 2, 3 haben die übliche bzw. vielfach genormte Breite von Küchenarbeitsplatten in der Größe von z. B. 60 cm. Das Plattenelement 3 bestimmt eine Rundung 5 der Gesamtarbeitsplatte, wogegen das Plattenelement 4 einen seitlichen Vorsprung aus der Arbeitsplatte 2 darstellt, wie er z. B. beim Ausführungsbeispiel im Bereich einer nur in den Umrissen dargestellten Herdmulde 6 erforderlich bzw. erwünscht ist. Die Rückseiten und auch der Enden des Plattenelementes 1 können in ihrem Verlauf an die Wand einer Küche angepaßt werden. Die freien Stirnseite der Plattenelemente 1 bis 4 sind vorzugsweise mit einer Stirnseitenummantelung versehen, die nahtlos in eine Deckplatte 7 übergehen kann. Die Plattenelemente 1 bis 4 bestehen aus der Deckplatte 7, der vorzugsweise vorgesehenen Stirnseitenummantelung und aus einer Kernplatte 8. Im Ansatzbereich des Plattenelementes 2 an das Plattenelement 1 und des Plattenelementes 4 an das Plattenelement 2 besitzen die Plattenelemente 1 bzw. 2 passende Randausschnitte in die zwischen 1 und 2 das Plattenelement 2 mit seinem Ende eingreift, wogegen das Plattenelement 4 in den entsprechenden Randausschnitt des Plattenelementes 2 eingesetzt ist. Die gebildeten Stoßfugen zwischen den Plattenelementen 1, 2, 2, 3 und 4, 2 wurden mit 9, 10, 11 bezeichnet. Das Plattenelement 2 besitzt an der Stoßfuge 9 sichtseitig eine durch die Platte durchgehende Endrundung 12. Entsprechende Endrundungen 12 sind im Bereich der sichtseitigen Längsenden des Plattenelementes 4 vorhanden. Dadurch ergibt sich eine entsprechende Randform der Stoßfugen 9 und 11. Die Stoßfuge 10 verläuft geradlinig.

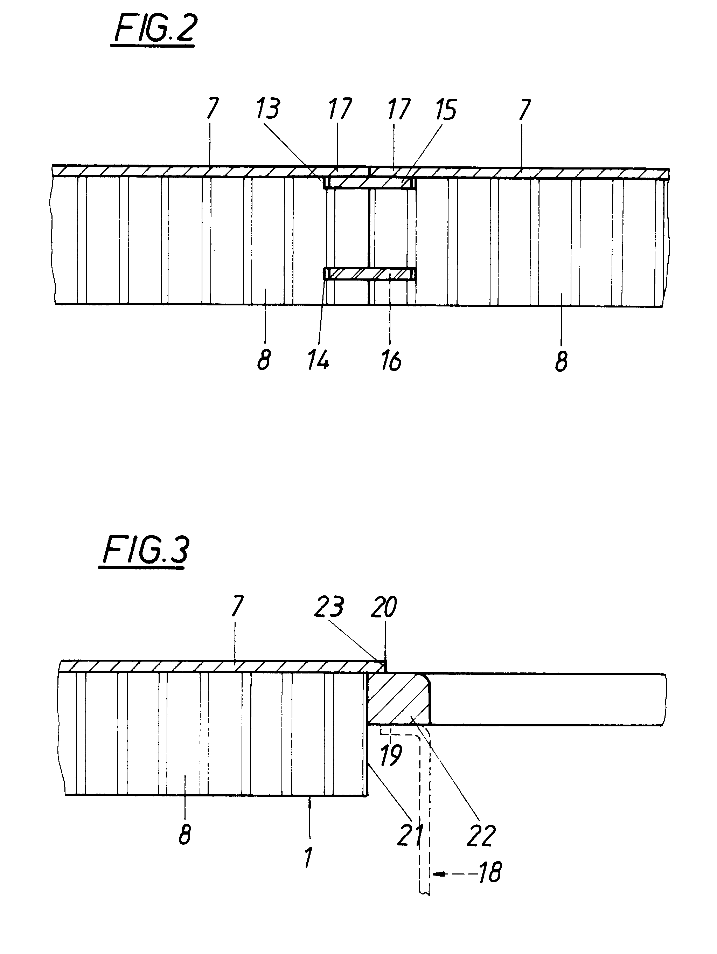

Entsprechend dem Verlauf der Stoßfugen 9, 10, 11 sind in die Stirnseiten der Plattenelemente 1 bis 4 im Höhenabstand voneinander jeweils zwei gegengleiche Nuten 13, 14 eingearbeitet, deren sichtseitige Enden einen bogenförmigen Verlauf des Nutgrundes aufweisen, so daß diese Nuten vor der Sichtseite enden und höchstens bis zur Kante zwischen Sichtseite und Stoßfuge reichen. Die Nuten 13, 14 nehmen zur Bildung einer Nut-Federverbindung einen angepaßten Verlauf und abgerundete Enden aufweisende, über die Länge des Stoßes durchlaufende Federn 15, 16 auf. Die Nut 13 für die obere Feder 15 ist nach oben hin (siehe Fig. 2) vom überstehenden Rand 17 der jeweiligen Deckplatte 7 begrenzt. Wenigstens diese Feder 15 besteht aus dem gleichen Material wie die Deckplatte 7, vorzugsweise aus einem sogenannten Mineralstein, der aus Steinmehl und einem Kunstharzbindemittel hergestellt ist. Die Federn 15, 16 können in die Nuten 13, 14 eingeklebt werden. Auch eine Klebverbindung der stoßenden Stirnseiten der Kernplatten 8 ist möglich und schließlich wird die jeweilige Stoßfuge 9, 10, 11 nach dem Zusammensetzen der Arbeitsplatte mit dem Bindemittel der Deckplatte ausgefüllt, so daß im Zusammenwirken mit der Feder 15 ein völlig dichter Abschluß der Fugen erreicht wird. Eine entsprechende Ausfüllung kann auch in den Fugen der Stirnseitenummantelung vorgenommen werden.

Beim Ausführungsbeispiel nach Fig. 3 nimmt das Plattenelement 1 als Einsatzteil ein Abwaschbecken 18 mit Tropftasse auf. Dieses Abwaschbecken 18 hat einen Randflansch 19. Die Deckplatte 7 des Plattenelementes 1 erhält einen der Umrißform des Beckens 18 folgenden Randausschnitt 20. Dagegen wird ein entsprechender Ausschnitt 21 der Kernplatte 8 etwas größer gewählt, so daß ein in diesen Ausschnitt 21 eingesetzter Tragrahmen 22 zur Halterung des Tragflansches 19 von dem geringfügig überstehenden Rand 23 der Deckplatte 7 überlappt wird. Der Tragrahmen 22 besteht aus dem gleichen Material wie die Deckplatten 7, besitzt aber eine größere Dicke von z. B. 12 mm.

## Patentansprüche

1. Arbeitsplatte, insbesondere Küchenarbeitsplatte, aus zwei oder mehreren aneinandergesetzt verbundenen Plattenelementen (1 bis 4), die jeweils aus einer Kernplatte (8) und einer wenigstens über die Oberseite dieser Kernplatte (8) reichenden Deckplatte (7), insbesondere aus kunstharzgebundenem Mineralstein bestehen, dadurch gekennzeichnet, daß die Plattenelemente (1 bis 4) über Nut-Federverbindungen (13 bis 16) mit über den Stoßbereich (9, 10, 11) durchgehenden, gegenüberliegenden Nuten (13, 14) zum Einlegen der Federn (15, 16) zusammengehalten sind, wobei jeweils eine Nut (13) oben von dem über sie überstehenden Rand (17) der Deckplatte (7) begrenzt ist, wenigstens die in diese Nuten (13) einzulegende, über die Nutlänge durchgehende Feder (15) aus dem Material der Deckplatte (7) oder einem gleiche Eigenschaften aufweisenden Material besteht, der Stoßspalt (9, 10, 11) der Deckplatten (7) mit dem Deckplatten-Bindemittel ausgefüllt ist.

2. Arbeitsplatte nach Anspruch 1, dadurch gekennzeichnet, daß auch die Feder (15) mit den überstehenden, die Nut (13) begrenzenden Deckplattenrändern (17) verklebt ist.

3. Arbeitsplatte nach Anspruch 1 oder 2, dadurch gekennzeichnet, daß bei den aneinandergesetzten Plattenelementen (1 - 4) die Nuten (13, 14) wenigstens in ihren an freibleibende Stirnseiten dieser Plattenelemente anschließenden Endbereichen unter bogenförmigem Verlauf des Nutgrundes in der Stoßseite des Plattenelementes oder an der Kante zwischen Stoßseite und freibleibender Stirnseite enden, wobei die Federn (15, 16) entsprechend der Nutform an den zugeordneten Enden passende Abrundungen aufweisen.

4. Arbeitsplatte nach einem der Ansprüche 1 bis 3, dadurch gekennzeichnet, daß bei seitlich an ein in Längsrichtung verlegtes Plattenelement (1, 2), insbesondere an ein im übrigen Längsbereich mit einer Stirnseitenummantelung versehenes Plattenelement angesetzten Plattenelementen (2, 4), das in Längsrichtung verlaufende Plattenelement (1, 2) einen Randausschnitt mit einer Endabrundung zur freibleibenden Stirnseite aufweist, der das mit angepaßtem Randverlauf zugeschnittene Stoßende des anderen Plattenelementes aufnimmt, wobei die Nuten (13, 14) und Federn (15, 16) in ihrer Form zumindest im wesentlichen an den durch diese Rundungen mitbestimmten Verlauf der gebildeten Stoßfuge (9, 10, 11) angepaßt sind.

5. Arbeitsplatte nach einem der Ansprüche 1 bis 4, dadurch gekennzeichnet, daß bei einem zur Aufnahme eines Einsatzteiles (18) bestimmten Plattenelement (1) die Deckplatte (7) entsprechend der Umrißform eines Tragflansches (19) oder sonstigen Halterandes des Einsatzteiles (18) ausgeschnitten ist, der entsprechende Ausschnitt (21) der Kernplatte (8) aber größer gehalten ist, so daß der überstehende Rand (23) der Deckplatte den Rand eines in den Ausschnitt (21) der Kernplatte (8) eingesetzten Tragrahmens (22) für den Einsatzteil (18) überlappt.

6. Arbeitsplatte nach Anspruch 5, dadurch gekennzeichnet, daß der Tragrahmen (22) aus dem gleichen Material wie die Deckplatten (7) besteht, aber eine größere Dicke aufweist.
